# EUROPÄISCHE PATENTSCHRIFT

(11) **EP 2 786 463 B1**
(45) Veröffentlichungstag und Bekanntmachung des Hinweises auf die Patenterteilung: **28.06.2017**
(21) Anmeldenummer: 12801485.9
(22) Anmeldetag: 22.11.2012
(51) Int. Cl.: H02J 13/00, H04L 12/12, H04B 3/54, H04L 12/28, H02J 3/14

(54) **SYSTEM FÜR EIN ENERGIEMANAGEMENT FÜR HAUSGERÄTE MIT EINER BEDARFSWEISE ERFOLGENDEN KOMMUNIKATIONS-BRÜCKE MITTELS ENERGIENETZ SOWIE DAZUGEHÖRIGES VERFAHREN**
SYSTEM FOR AN ENERGY MANAGEMENT OF DOMESTIC APPLIANCES WITH A COMMUNICATION BRIDGE, IF REQUIRED, PROVIDED BY AN ENERGY NETWORK, AND ASSOCIATED METHOD
SYSTÈME DE GESTION DE L'ÉNERGIE POUR APPAREILS MÉNAGERS AVEC UN PONT DE COMMUNICATION ÉTABLI SELON LES BESOINS AU MOYEN D'UN RÉSEAU D'ÉNERGIE, AINSI QUE PROCÉDÉ ASSOCIÉ

(30) Priorität: 29.11.2011 DE 102011087277
(43) Veröffentlichungstag der Anmeldung: 08.10.2014
(73) Patentinhaber: BSH Hausgeräte GmbH, 81739 München (DE)
(72) Erfinder: GAUGLER, Johannes, 93073 Neutraubling (DE); KOLBER, Andreas, 12683 Berlin (DE); LEITL-NOBEL, Martin, 86465 Welden (DE); RANCK, Sharon, 89407 Dillingen (DE); SIPPEL, Matthias, 83329 Waging am See (DE)
(86) Internationale Anmeldenummer: PCT/EP2012/073348
(87) Internationale Veröffentlichungsnummer: WO 2013/079391

(56) Entgegenhaltungen:
- EP-A2- 1 367 774
- DE-A1-102006 006 861
- DE-A1-102010 006 527
- DE-U1-202009 013 003
- US-A1- 2011 202 189

## Beschreibung

Die Erfindung betrifft ein System für ein Energiemanagement für Hausgeräte, wobei für mindestens eine Einheit des Energiemanagements eine Datenkommunikation für mindestens ein eindeutig bestimmbares Hausgerät ausführbar ist.

Die Erfindung betrifft ferner ein Verfahren zum Betreiben eines solchen Systems.

Die Vernetzung von Hausgeräten, denen eine gewisse Intelligenz zukommt, wird meist in einem System vorgenommen, dass im Besonderen auf ein Energiemanagement in Bezug auf einen Verbund mehrerer Hausgeräte sowie gegebenenfalls auch anderer Verbraucher oder Geräte, ausgerichtet ist. Dieser Verbund stellt meist eine wirtschaftliche Einheit innerhalb eines Gebäudes, die für die Abrechnung von Energiekosten, verantwortlich ist, wie ein Haushalt, dar. Innerhalb dieser wirtschaftlichen Einheit ist ein so genanntes Home-Area Network etabliert, das unter der Kontrolle einer zentralen Steuerungseinheit das systembezogene Energiemanagement, auch als Home Energy Management System (in einer geläufigen Abkürzung meist als HEMS) bezeichnet, durchführt. Die angeführte Vernetzung von Hausgeräten erfolgt überwiegend mittels drahtloser Kommunikationsverfahren, die Frequenzbänder im n-fachen GHz Bereich benutzen und auch spezifiziert bzw. standardisiert sind. Es werden übliche Funknetzstandards wie Wi-Fi (WLAN) im 2,4 und 5 MHz Bereich und ZigBee im 2,4 MHz Bereich herangezogen. Bei den Frequenzbereichen dieser Funkstandards ist der Pfadverlust in der Freiraumdämpfung und bei der Durchdringung von Wänden und Decken eines Gebäudes ziemlich groß. Hinzu kommt, dass die Frequenzbereiche dieser Funkstandards bereits stark durch bestimmte Hausgeräte, wie Mikrowellenöfen, in einem Haushalt genutzt werden, so dass somit diese Funkstandards erheblichen Störeinflüssen ausgesetzt sind. Weiterhin wird durch den Feuchtigkeitseintrag im Übertragungsweg bei diesen Frequenzbereichen noch zusätzliche Dämpfung hervorgerufen. Befindet sich ein Teil der zu vernetzenden Hausgeräte, wie Waschmaschinen, Wäschetrockner oder Waschtrockner in abgesetzten Räumlichkeiten, Nebengebäuden, anderen Stockwerken oder Kellergeschossen, getrennt dem systembezogenen Energiemanagement (HEMS), so ist eine drahtlose Kommunikation zu den in den abgesetzten Räumlichkeiten befindlichen Hausgeräten mit den beschriebenen Funkstandards sehr schwer zu erreichen bzw. meist nicht mehr möglich. Dies bedeutet, dass ein systembezogenes Energiemanagement mit den angeführten Funkstandards für Hausgeräte in den abgesetzten Räumlichkeiten nicht zuverlässig bzw. nicht möglich ist.

Es ist auch schon bekannt geworden, eine Reichweitenverlängerung von Funkverbindungen in einem Gebäude für die nicht über den vorgesehenen Funkstandard im Gigahertzbereich erreichbaren Geräte in entfernten Räumen über eine Brücken-Technologie zu erreichen. Dabei wird eine Kommunikations-Verbindung über das Energie- Versorgungsnetz als Brückentechnologie eingesetzt. Es wird hier auch die Terminologie Power-Line-Communication, in Abkürzung PLC, die dann als Brückentechnologie wirkt, angewandt. Im Ergebnis kann eine Vergrößerung der Reichweite bei einem Funkstandard, wie Wi-Fi oder ZigBee erreicht werden, da hierbei zwei, letztlich getrennt voneinander wirksame, Funknetze über Power-Line-Communication miteinander verbunden werden.

Für ein System für ein Energiemanagement - HEMS - von Hausgeräten, bei dem auch die in den entfernten Räumlichkeiten befindlichen Hausgeräte, wie Waschmaschine, Wäschetrockner und dgl. vornehmlich unter Energiegesichtspunkten angesteuert werden, würde jedoch eine solche, bekannt gewordene, Brückentechnologie insofern als wenig effizient angesehen werden, indem erkannt würde, dass die Kommunikationsmodule für Powerline bzw. Adapter für die nachfolgende Umsetzung auf die zu berücksichtigende Funkverbindung nach dem gewählten Funkstandard mit einem erheblichen Stromverbrauch, wie ununterbrochen ca. 5 bis 15 Watt einherginge, so dass die entfernt untergebrachten Hausgeräte, die nur einige Stunden pro Woche betrieben werden, schon mit einem zuzurechnenden Energieverbrauch von ca. 2 KWh pro Woche belastet wären, bevor deren originärer Verbrauch von ca. 30 kWh pro Woche durch das System für das Energiemanagement eine Entlastung für den gegenüber dem Energieversorgungsunternehmen abzurechnenden Energieverbrauch ermöglichen würde.

Ein System für ein Energiemanagement von Hausgeräten bzw. HEMS geht aus der US 2011/0153109 A1 hervor. Damit werden Hausgeräte und andere Verbraucher so gesteuert, dass in Spitzenlastzeiten der Verbrauch an elektrischer Energie reduziert ist. Es soll vermieden werden, nur von den speziellen Vorgaben eines Elektrizitätsversorgungsunternehmens abhängig zu sein. Dafür soll es möglich sein, dass der Benutzer des HEMS das Belastungsprofil, das durch die Gesamtheit der Geräte auslösbar ist, selbst bestimmt. Die Ansteuerung der einzelnen Hausgeräte erfolgt drahtlos mit ZigBee, Wi-Fi oder Frequenzmodulation im Bereich von Radiofrequenzen. Die Problematik der drahtlosen Ansteuerung von Hausgeräten in abgesetzten Räumlichkeiten ist nicht angesprochen.

Durch die DE 10 2006 049 402 A1 ist es bekannt, einen Powerline-Converter außerhalb eines Endgerätes, wie ein Hausgerät, einzusetzen. Dabei dient der Powerline-Converter dazu, das Endgerät bzw. das Hausgerät mit einem lokalen Hausgerätenetzwerk zu verbinden. Die Netzleitungen der Energieversorgung der Hausgeräte werden zum Datenaustausch verwendet. Eine Kombination mit einer drahtlosen Ansteuerung gewisser Hausgeräte ist nicht beschrieben.

In der DE 20 2009 013 003 U1 ist ein Zusammenwirken eines drahtlosen Netzwerkes bzw. eines Funknetzwerkes und eines drahtgebundenen Netzwerkes, das über Gebäudestromleitungen den Datenaustausch vornimmt, beschrieben. Mit dem drahtlosen Netzwerk werden die Clients bzw. Geräte angesteuert. Es werden geeignete Vorkehrungen getroffen, um durch Einsatz eines Speichers bzw. einer Datenbank den Datenaustausch zwischen beiden Netzen ausführen zu können. Das drahtgebundene Netzwerk ist bezüglich seiner Reichweite auf diejenige des Gebäudestromnetzes ausgerichtet. Der Energiebedarf bei der Umsetzung der Daten von dem drahtlosen Netz zu dem drahtgebundenen Netz und umgekehrt wird in dieser Druckschrift nicht problematisiert.

Die DE 10 2006 006 861 A1 offenbart ein Verfahren zur Übertragung von Audio- und Videodaten. Für die Übertragung stehen sowohl eine WLAN-Verbindung als auch eine Powerline-Verbindung zur Verfügung. Die Auswahl, welche Verbindung verwendet wird, erfolgt anhand einer Qualitätsbeurteilung der einzelnen Verbindungen sowie anhand der zur Verfügung stehenden Bandbreite.

Die Aufgabe der Erfindung besteht daher darin, ein System für ein Energiemanagement von Hausgeräten anzugeben, das bei Erforderlichkeit den Einsatz einer Verbindungsbrücke zur Reichweitenverlängerung einer drahtlosen Ansteuerung von mindestens einem bestimmbaren Hausgerät, insbesondere in einer abgesetzten Räumlichkeit, gestattet und dabei so ausgelegt ist, dass ein Energiebedarf für Kommunikationsmodule gering bleibt.

Die Erfindung wird durch die Gesamtheit der im unabhängigen Anspruch 1 angegebenen und auf ein System gerichteten Merkmale gelöst und durch die auf diesen Anspruch rückbezogenen, abhängigen Ansprüche weitergebildet.

Entsprechendes gilt für die im weiteren, unabhängigen Anspruch 11 und auf ein Verfahren gerichteten Merkmale, die dann durch die auf diesen Anspruch rückbezogenen, abhängigen Ansprüche weitergebildet werden.

Die Erfindung betrifft also ein System für ein Energiemanagement für Hausgeräte, wobei für mindestens eine Einheit eines Energiemanagements eine Datenkommunikation für mindestens ein eindeutig bestimmbares Hausgerät ausführbar ist, wobei eine Datenkommunikation mit dem mindestens einen Hausgerät durch eine direkte WLAN Funk-Verbindung bei genügender Funkreichweite durchführbar ist, wobei bei ungenügender Funkreichweite eine Powerline-Überbrückung für das bestimmbare Hausgerätes mit einer Stromversorgung einsetzbar ist, wobei die Aktivierung der Stromversorgung über eine Kurzzeit-Funkverbindung auslösbar ist.

Bei der Erfindung wird also eine Powerline-Überbrückung nur dann vorgenommen, wenn die originäre Funkverbindung im Gigahertzbereich fehlschlägt. Durch den Einsatz einer Kurzzeit-Funkverbindung im Zusammenhang mit einer ausgeklügelten Strategie abgestimmter Prozess-Schritte der Einheit des Energiemanagements ist es möglich, den Stromverbrauch aller Komponenten der Powerline-Überbrückung gering zu halten, da diese Komponenten nur für den eigentlichen Betrieb des bestimmbaren Hausgerätes mit Strom versorgt werden. Ein Stand-By-Betrieb dieser Komponenten scheidet aus. Bei der Kurzzeit-Funkverbindung genügt es, wenn lediglich deren Empfänger ständig empfangsbereit ist, was mit einem äußerst geringfügigen Aufwand einhergeht.

Das mindestens eine, eindeutig bestimmbare Hausgerät ist in aller Regel ein Großdistanz-Hausgerät, wie Waschmaschine, Wäschetrockner oder Waschtrockner, das sich in einer abgesetzten Räumlichkeit eines Gebäudes, wie Keller, Untergeschoss od. dgl. befindet, die funktechnisch bei Funkfrequenzen über 1 GHz äußerst schwer zu erreichen ist. Wenn es auch vorstellbar ist, dass eine Einheit des Energiemanagements durch Erfahrungswerte eines Benutzers und/oder kombiniert mit festen Zeitvorgaben betreibbar ist, so hat sich herausgestellt, dass eine Beeinflussung des Energiemanagements durch hierzu dienliche Informationen aus dem Internet bzw. einem intelligenten Energieversorgungsnetz zu noch günstigeren Ergebnissen bezüglich abrechenbarer Kosten gegenüber einem Energieversorgungsunternehmen führen, da gerade übergeordnete Informationen über eine schwache Energienetzauslastung, die meist mit günstigen Stromtarifen einhergehen, nur so genutzt werden können.

Die Einheit des systembezogenen Energiemanagements ist primär so ausgelegt, das ein erstes WLAN-Funknetz im Frequenzbereich über 1 GHz aufbaubar ist. Damit soll versucht werden, dass zuerst eine Kommunikation zu dem bestimmbaren Hausgerät, das ä priori WLAN- fähig ist, über das direkt wirkende, erste Funknetz vorgenommen wird. Nur wenn die Aufnahme dieser ersten Funkverbindung fehlschlägt, wird die Powerline-Überbrückung vorgenommen.

Zur Aufnahme der Powerline-Überbrückung gehört, dass ausgehend von der Einheit des Energiemanagements eine ISM Funkeinheit den Sendeteil für die Kurzzeit-Funkverbindung abgibt und dementsprechend ansteuerbar ist.

Dabei ist erfindungsgemäß vorgesehen, dass die ISM Funkeinheit für die Aussendung eines Funkdatagramm ausgebildet ist, wobei ein 868/915-MHz-Funkkanal berücksichtigt wird. In diesem freien ISM (Industrial Scientifc and Medial) Funkfrequenzband und zugehörigen Sub-Frequenzbändern ist eine kurzzeitige Einschaltdauer und ein dazugehöriges Funkdatagramm erlaubt, die für Fernwirk-technische Anwendungen besonders geeignet sind. Bei extrem kurzer Einschaltzeit kann eine sehr hohe Sendeleistung zum Zuge kommen, was die Gebäudedurchdringungsfähigkeit steigert. Beispielweise gibt es Möglichkeiten bei <1% Einschaltdauer 500mW Sendeleistung einzusetzen, so dass mehrere Stahlbetondecken in einem Gebäude durchdrungen werden können.

Auf der Seite der Einheit des systembezogenen Energiemanagements wird bei Aufnahme der Powerline-Überbrückung auch ein PLC-Interface angesteuert, das dann die Datenübertragung über ein Energienetz ermöglicht bzw. unterstützt.

Auf der Seite des eindeutig bestimmbaren Hausgerätes ist als erfindungsgemäß sehr wichtige Komponente eine zugeordnete Einheit zum Empfang des Funkdatagramm bzw. von Datenpaketen der Kurzzeit-Funkverbindung vorhanden, wobei eine ständige Empfangsbereitschaft dieser Einheit durch eine Batteriespeisung vorliegt. Dabei ist die Leistungsaufnahme dieser Empfangseinheit so gering, dass eine Lebensdauer der Batterie von mindestens 10 Jahren erwartet werden kann.

Die Einheit zum Empfang des Funkdatagramm bzw. der Funkdatenpakete kann mittelbar den PLC-WLAN-Extension-Adapter aktivieren. Bei Empfang eines bestimmbaren Datenpaketes in der erwähnten Empfangseinheit wird die Stromversorgung des PLC-WLAN-Extension-Adapters eingeschaltet, so dass der Datenaustausch über das Energieversorgungsnetz erfolgen kann. Über einen Access-Point des PLC-WLAN-Extension-Adapters kann der Datenaustausch weiter drahtlos zum Hausgerät hin erfolgen.

Hierfür dient ein dem Hausgerät zugeordnetes WLAN-Interface, das auch eingeschaltet wird, wenn die Stromversorgung über die Einheit zum Empfang von Funkdatagramm bzw. der Datenpakete durch einen Erkennungsvorgang folgerichtig eingeschaltet wird.

Es liegt somit zwischen dem PLC-WLAN-Extension-Adapter und dem WLAN-Inteface des Hausgeräts eine zweite drahtlose Datenkommunikation als WLAN Verbindung vor, die die zuvor fehlgeschlagene erste drahtlose Datenkommunikation ersetzt.

Es hat sich als bevorzugt herausgestellt, dass die Einheit zum Empfang des Funkdatagramm der Kurzzeit-Funkverbindung im Hausgerät aufgenommen ist. Damit ergibt sich für den Anwender von Hausgeräten in abgesetzten Räumlichkeiten eine kompakte und robuste Lösung, die eine einfache Installation ermöglicht.

Sollte jedoch die Erfindung auch nachträglich für ein WLAN-fähiges Hausgerät, das in einer abgesetzten Räumlichkeit aufgestellt wird, zur Anwendung kommen, also ein Powerline-Überbrückung angewandt werden können, so ist die Einheit zum Empfang des Funkdatagramm der Kurzzeit-Funkverbindung nahe dem Hausgerät unterzubringen und mit einer Zwischenstecker/Buchsen-Einheit zu versehen.

Ein erfindungsgemäßes Verfahren zum Betreiben des erfindungsgemäßen Systems sieht vor, dass zunächst versucht wird, über eine erste drahtlose Datenkommunikation als WLAN-Funk-Verbindung zwischen der Einheit des Energiemanagements und dem bestimmten Hausgerät herzustellen, und falls dies fehlschlägt, eine Powerline-Überbrückung zwischen der Einheit des Energiemanagements und dem bestimmten Hausgerät herzustellen, wobei eine Kurzzeit-Funkverbindung dazu dient, die Aktivierung einer Stromversorgung von Komponenten der Powerline-Überbrückung, die zu dem bestimmbaren Hausgerät gehören, auszulösen, so dass über die Powerline-Überbrückung eine zweite drahtlose Datenkommunikation als WLAN Verbindung im Bereich des bestimmbaren Hausgerätes gebildet wird, die die erste, fehlgeschlagene drahtlose Datenkommunikation substituiert.

Dabei ist vorgesehen, dass die Kurzzeit-Funkverbindung ein Funkdatagramm bzw. Datenpakete in einem 868/915 MHz-Funkkanal aussendet. Ferner wird berücksichtigt, dass die erste und die zweite drahtlose Datenkommunikation durch ein lokales Funknetz mit einem Frequenzbereich über 1 GHz, bevorzugt ein WiFi- oder ein Zigbee-Funknetz mit 2,4 GHz ausgebildet ist.

Soweit die Erfindung durch auf die unabhängigen Ansprüche rückbezogene, nicht selbständige Ansprüche weitergebildet wird, so soll es so sein, dass eine zunächst angegebene Kette von Rückbeziehungen nicht einschränkend in Bezug auf die insgesamt mitgeteilte Lehre zu sehen ist, soweit auch andere Kombinationen von Merkmalen von Ansprüchen sich als geeignet und ausführbar aus Sicht des Fachmanns ergeben.

Im Folgenden wird die Erfindung anhand von Ausführungsbeispielen schematisch genauer beschrieben. Gleiche Bezugszeichen zeigen gleiche oder vergleichbare Teile. Die Figuren werden zunächst kurz erläutert.
Fig. 1 zeigt grundsätzlich eine Brückentechnologie in einem Gebäude zur Reichweitenerhöhung eines Drahtlos-Netzwerkes,
Fig. 2 zeigt in Bezug auf ein entfernt befindliches Hausgerät, wie eine Powerline-Überbrückung für ein weiteres Drahtlos- Netzwerk auf Anforderung einer Energiemanagement-Einheit einschaltbar wird,
Fig. 3 zeigt ein schematisch die sich ergebende Kommunikation, wenn ein dem entfernt befindlichen Hausgerät zugeordneter, interner Funkschalter für die Aktivierung der Power-line-Überbrückung für das weitere Drahtlos-Netzwerk eingesetzt wird, und
Fig. 4 zeigt schematisch die sich ergebende Kommunikation, wenn ein dem entfernt befindlichen Hausgerät zugeordneter, externer Funkschalter für die Aktivierung der Powerline-Überbrückung für das weitere Drahtlos-Netzwerk eingesetzt wird.

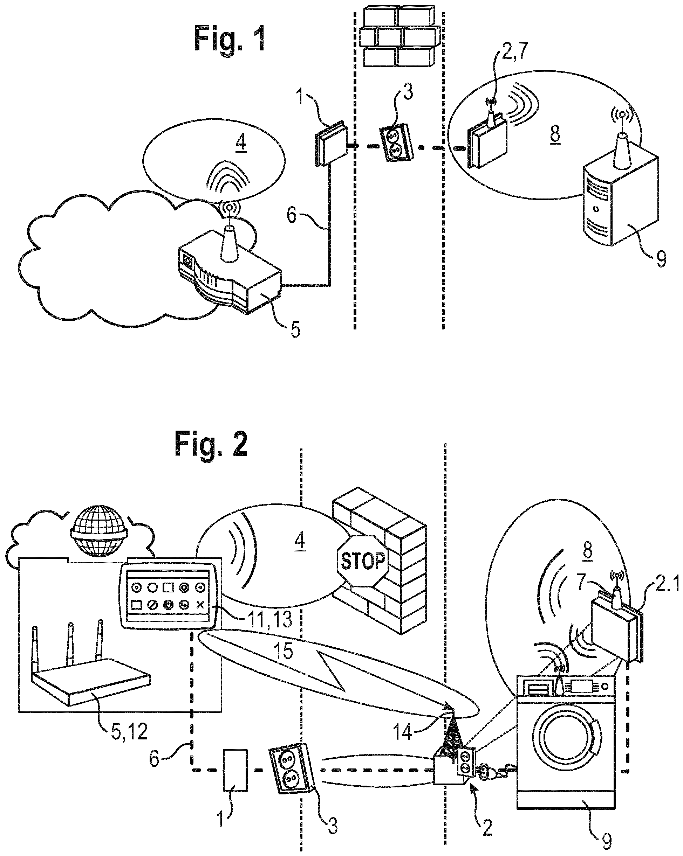

Zum Verständnis der Erfindung wird in Fig. 1 eine prinzipielle Anwendung einer Powerline-Reichweitenerhöhung von drahtlosen Netzwerken gezeigt. Ein drahtloses Netzwerk WiFi bzw. 4 steht für eine Datenkommunikation in gleicher Weise wie ein PLC- Adapter 1 zur Verfügung. Der PLC- Adapter 1 ist über ein Energieversorgungsnetz 3 in einem, mit einer Wand angedeuteten, Gebäude mit einem PLC- Extension Adapter 2 verbunden. Ein Internet- bzw. WLAN-Router 5 weist zur Leitungs-gebundene Datenübertragung mittels Ethernet 6 als Leitungsabschluss den PLC- Adapter 1 auf. Auf der Seite des Adapters 2 befindet sich eine funktechnisch schwer zu erreichende Räumlichkeit. In genau dieser Räumlichkeit wird für die dort befindlichen WLAN- fähigen Geräte über einen zum Adapter 2 gehörigen WLAN-Access-Point 7 deren Ansteuerung bewirkt. Es liegt also ein zweites drahtloses Netzwerk WiFi bzw. 8 vor, das für die WLAN-fähigen Geräte in der abgesetzten Räumlichkeit so wirkt, als ob diese Geräte direkt vom Netzwerk 4 aus angesteuert würden. Es liegt also eine WLAN - PLC Brücken Lösung vor. Dabei ist jedoch zu Problematisieren, dass die Geräte, wie PLC- Adapter 1, WLAN-Router 5, PLC-Extension Adapter 2 dauernd angeschlossen sind, also dauernd Leistung verbrauchen. Es wurde ermittelt, dass diese verbrauchte Leistung bei 5 bis 15 Watt liegt, was in einer Woche zu einem Energieverbrauch von bis zu 2,5 kWh führt. Wenn demgegenüber Hausgeräte in den abgesetzten Räumlichkeiten mit 1 bis 4 kW Anschlusswert nur wenige Stunden pro Woche betrieben werden, so würde bei angenommen 25 kWh Energieverbrauch pro Woche von diesen Geräten allein 1/10 dieses Energieverbrauchs für die Vernetzung dieser Geräte benötigt werden. Dies ist entschieden zu groß für ein, auf eine Reduzierung von gegenüber einem Elektrizitätsunternehmen abzurechnenden Energiekosten ausgelegtes, System für ein Energiemanagement für Hausgeräte bzw. HEMS oder gegebenenfalls von intelligenten Energieversorgungsnetzen (Smart Grids), von denen ausgehend auf das Verbrauchsverhalten von Hausgeräten eingewirkt wird.

Es müsste also möglich werden, eine Brückenlösung zur WLAN Reichweitenerhöhung nur im Bedarfsfall aktiv zu schalten. Die Aktivierung des PLC-WLAN-Brücke hat also bei Anforderung mit einem zweiten, drahtlosen Übertragungsverfahren bzw. mit einem zweiten Funkstandard zu erfolgen, der dem Standard von Wi-Fi bzw. ZigBee, dem Funktechniken im Gigahertzbereich (2,4 und 5 GHz für WiFi, 2,4 GHz für Zigbee) zugrundeliegen, bezüglich der Durchdringungsfähigkeit von Wänden und Decken eines Gebäudes überlegen ist.

Es wurde herausgefunden, dass als zweite Funkverbindung, um die Geräte, wie PLC-Adapter 1, WLAN-Router 5, PLC-Extension Adapter 2 der in Fig. 1 erläuterten Brücken-technologie, aktiv schalten zu können, ein Standard, der als ISM (Industrial Scientific and Medial) bezeichnet wird, zu berücksichtigen ist. Hierbei gibt es im Funkfrequenzband von 868 MHz (EU) bzw. 915 MHz (US) mit einzelnen Sub-Frequenzbändern eine Reihe von verfügbaren Lösungen zur einfachen drahtlosen Fernbedienung, Alarmierung und zum Ein- und Ausschalten von Stromversorgungen für entfernt befindliche Geräte. Den Funkanwendungen in diesen Frequenzbereichen sind zwar nur kurze Einschaltdauern und Funkdatagrammme erlaubt, jedoch kann dadurch bei gleicher Sendeleistung wie im 2,4 GHz-Bereich eine bessere Durchdringungsfähigkeit bei Wänden und Decken und anderen Hindernissen in einem Gebäude erreicht werden. Der Standard bei der Nutzung des 868 MHz Bereiches sieht vor, dass die maximale Sendeleistung (Effective Radiated Power bzw. ERP) in Bezug auf die relative Einschaltdauer (DutyCycle) festgelegt ist. In einem Gebäude ist der Sendepegel für die relative Einschaltdauer von < 10% auf 25 mW begrenzt. Im sogenannten g3-Band (869,4 - 869,65 MHz) ist bei kurzen Einschaltdauern von < 1% sogar eine Sendeleistung von 500 mW erlaubt. Somit können auch mehrere Stahlbeton-Decken in einem Gebäude ohne Weiteres durchdrungen werden.

Ein wichtiger erfinderischer Gedanke besteht also darin, die Stromversorgung der PLC-Adapter, insbesondere des entfernt befindlichen PLC-WLAN Extender Adapters, bei einer PLC-Bridging Anordnung zur Ansteuerung mindestens eines in einem entfernten Gebäudeteil befindlichen WLAN- fähigen Hausgerätes, dessen Berieb über ein System für ein Energiemanagement beeinflusst wird, mithilfe einer auf ISM Funktechnologie (868/915 MHz) basierenden Funkverbindung ein- und auszuschalten.

Unter Bezugnahme auf die Fig. 2 wird die Erfindung weiter erläutert. Ausgehend von einem System für das Energiemanagement für Hausgeräte bzw. HEMS, nachfolgend mit Energiemangement-Einheit 11 bezeichnet, wird vorgesehen, dass diese Einheit 11 mit einem WLAN Funkmodul 12 und einer ISM- (bzw. 868/915 MHz-) Funk-Sendeeinheit 13 versehen ist. Über ein Ethernet 6 ist eine PLC Verbindung über ein Energieversorgungsnetz 3 zu einem PLC-Extension Adapter 2 mit einem WLAN Access Point 7 vorliegend. Im entfernten Gebäudeteil kann somit ein WLAN-fähiges Hausgerät 9, dessen Adresse der Energiemanagement-Einheit 11 bekannt ist, angesteuert werden.

Wenn ausgelöst durch die Energiemanagement-Einheit 11 die Notwendigkeit auftritt, eine Kommunikationsverbindung zu einem eindeutig identifizierbaren bzw. adressierbaren, WLAN-fähigen Hausgerät 9 aufzubauen, versucht die Einheit 11 zuerst über den eigenen Router 5 mit zugehörigem Funkmodul 12 über ein erstes drahtloses Netzwerk 4 (WiFi) das Hausgerät 9 zu erreichen. Wenn diese Verbindung wegen fehlender funktechnischer Erreichbarkeit nicht aufgebaut werden kann, aktiviert die Einheit 11 den PLC-Adapter 1 und sendet über die Funk-Sende-Einheit 13 ein Datagram zur Aktivierung des PLC-Extension-Adapter 2. Ein der ISM- Sendeeinheit 13 zugeordneter Empfänger 14 in dem entfernten Gebäudeteil kann aufgrund des gesendeten Datagrams die Stromversorgung des PLC-Extension-Adapters 2 und des Hausgerätes 9 einschalten. Die Datenkommunikation zum Hausgerät 9 wird durch ein zweites drahtloses Netzwerk (WiFi) 8, ausgehend von einem WLAN-Access-Point 7 in dem entfernten Gebäudeteil vorgenommen. Nach dem Ende des über die Energiemanagement-Einheit 11 ausgelösten Prozessablaufs in dem Hausgerät 9 kann die Stromversorgung des Adapters 2 und des Hausgerätes 9 über ein weiteres Funkdatagramm ausgehend von der Sendeeinheit 13 wieder deaktiviert werden. Das Zusammenwirken der Funk-Sende-Einheit 13 und des zugeordneten Empfängers 14, der auch als ein Wachruf-Empfänger anzusehen ist, in dem für ISM vorgesehenen Frequenzbereich - mit den Restriktionen für die Sendeleistung bei einer bestimmten relativen Einschaltdauer - wird nachfolgend auch mit der Begriff Kurzzeit-Funkverbindung 15 beschrieben.

Der grundsätzliche anhand der Fig. 2 dargestellte, Aufbau zur Ansteuerung des abgesetzten, eindeutig bestimmbaren Hausgerätes, nachfolgend auch als Großdistanz-Hausgerät 9 bezeichnet, wird nachfolgend in verschiedenen Optionen/ Varianten noch ausführlicher dargestellt.

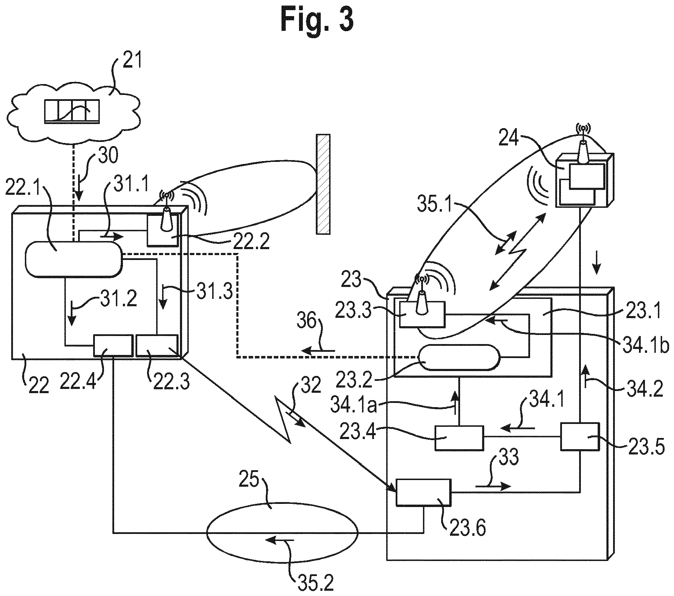

Bei der ersten Variante wird eine dem ISM Empfänger nachgeordnete Stromschaltungslogik direkt in das entfernt befindliche Hausgerät integriert. Dazu gehört die Beschreibung anhand von Fig. 3.

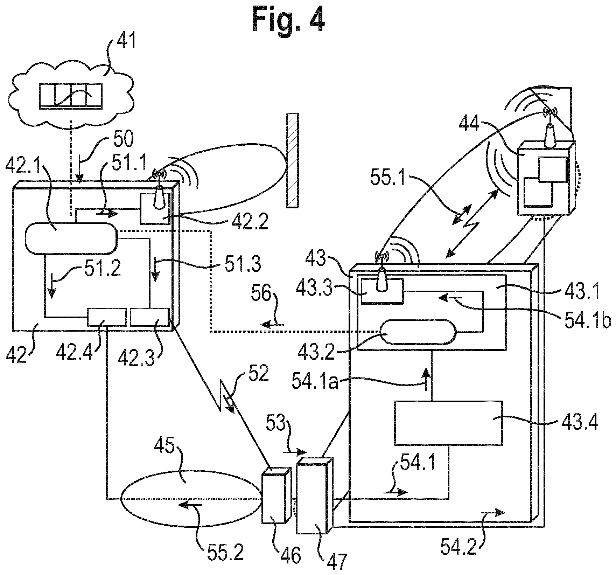

Bei der zweiten Variante kommt ein externer Steckdosen Funkschalter zum Einsatz, an den u. a. das entfernt befindliche Hausgerät angeschlossen wird. Dazu gehört die Beschreibung anhand von Fig. 4.

Bei der Darstellung anhand von Fig. 3 wird zunächst davon ausgegangen, dass über ein intelligentes Energieversorgungsnetz (Smart Grid) und/oder über das Internet 21 ein Hausenergiemanagement (HEMS) beeinflussbar ist. Eine Einheit 22 des systembezogenen Energiemanagements berücksichtigt demgemäß die Zusammenfassung der extern über das Internet oder das Smart Grid eintreffenden Informationen, wenn eine Kommunikation zu einem Großdistanz-Hausgerät 23 aufgebaut werden soll. Die Einwirkung des Internet bzw. des Smart Grid auf die Einheit 22 wird durch die Wirkungslinie 30 veranschaulicht.

Die der Einheit 22 zugeordnete Prozess-Steuerung 22.1 versucht zuerst über einen eigenen Access-Point 22.2 eine WLAN-Verbindung, vgl. die Wirklinie 31.1, mit dem Hausgerät 23 aufzunehmen. Bei fehlgeschlagenem Verbindungsaufbau infolge zu geringer Funkreichweite wird durch den Steuerungsprozess ein eigenes PLC-Interface 22.4 aktiviert, was mit der Wirklinie 31.2 hervorgehoben ist. Zugleich erhält ein interner ISM- 868/915 MHz-Sender 22.3 einen Aktivierungs-Befehl 31.3.

Über eine Kurzzeit-Funkverbindung- vgl. 15 in Fig. 2 - in dem 868/915 MHz Funkkanal wird ein Aufwach (Wake Up) - Funkdatagramm mit eindeutiger Ziel-Identifikation und Kommando zum Aktivieren einer Stromversorgung für den entfernten Gebäudebereich mehrfach - in der Regel dreimal - ausgesendet, vgl. die Wirklinie 32.

Im Hausgerät 23 überwacht eine batteriebetriebene ISM- Funk- Empfangseinheit bzw. ein Wake-Up- Empfänger 23.6 die benutzte ISM 868/915 MHz Funkfrequenz. Der Empfänger 23.6 empfängt das ausgesendete Funkdatagramm als Aufwachsequenz und ist in der Lage es selektiv, d.h. nur für die zugehörige Identifikations-Kennung des Hausgerätes 23 zu dekodieren und zu erkennen. Der Empfänger 23.6 aktiviert die Stromzufuhr des Hausgerätes 23.

Über einen Stromversorgungs-Aufteiler bzw. eine Splitting-Box 23.5 wird zum einen eine zentrale Stromversorgungseinheit 23.4 im Hausgerät 23 mit Strom versorgt, vgl. die Wirkungslinie 34.1 und zum anderen wird ein PLC-WLAN-Extension-Adapter 24 am nach außen geführten Stromanschluss der Splitting-Box 23.5 mit Strom versorgt, vgl. die Wirkungslinie 34.2. Von der zentralen Stromversorgung 23.4 des Hausgerätes 23 ausgehend wird wiederum, vgl. die Wirkungslinie 34.1a, die die Stromversorgung für eine Bedien- und Kontrolleinheit 23.1 des Hausgerätes 23 aktiviert. Nach dem automatischen Start und der Initialisierung von Hardware/Software wird das in der Kontrolleinheit 23.1 befindliche WLAN- Interface 23.3 durch eine zentrale Steuerungs-Prozesseinheit 23.2 gestartet und konfiguriert, vgl. die Wirkungslinie 34.1b.

Über das WLAN-Interface 23.3 meldet sich das Hausgerät 23 anhand der gespeicherten Anmeldedaten als Client am PLC-WANL-Adapter 24, der als WLAN-Access-Point fungiert, an und es wird eine WLAN-Funkverbindung zwischen diesen beiden WLAN Endgeräten aufgebaut, vgl. die Wirklinie 35.1. Über das PLC Interface des PLC-WLAN-Extension-Adapters 24 wird über ein vorliegendes Hausstromnetz 25 die PLC-Bridge-Verbindung zu dem PLC-Interface 22.4 der Einheit 22 aufgebaut. Dazu wird auch auf eine in Fig. 3 eingezeichnete Wirklinie 35.2 verwiesen.

In weiterer Folge wird der Aufbau der bidirektionalen Kommunikations-Verbindung zwischen einer Prozess-Steuerung 22.1 des systembezogenen Energiemanagements eingeschlossen der Beeinflussung durch das Internet bzw. des Smart-Grid und der zentralen Steuerungs-Prozesseinheit 23.2 auf der Seite des Hausgerätes 23 abgeschlossen, vgl. die Wirkungslinie 36. Danach erfolgt die Übertragung von Steuerungs- und/oder Strommanagement Informationen des systembezogenen Energiemanagements (HEMS) zum Hausgerät 23 bzw. die Übermittlung von Status- oder Monitoring-Informationen vom Hausgerät 23 zu dem systembezogenen Energiemanagement, verkörpert durch die Einheit 22, wobei die Wirklinie 35.2 die bidirektionale Kommunikation über PLC andeutet, die im Speziellen zwischen dem PLC-Interface 22.4 und einem weiteren Anschluss (ohne Bezugszeichen) der Einheit 23.6, die auch den ISM Funkempfänger aufnimmt, stattfindet.

Nach Beendigung bzw. Aufhebung der Bedingung, die den Aufbau der WLAN/ PLC Kommunikations-Verbindung zwischen dem systembezogenen Energiemanagement bzw. HEMS, verkörpert durch die Einheit 22, und dem Hausgerät ausgelöst hatte bzw. nach Ablauf der durch das systembezogene Energiemanagement über diese Kommunikations-Verbindung aktivierten Prozessabläufe im Hausgerät 23 kann die Stromversorgung für das Hausgerät 23 und den PLC-WLAN-Extension-Adapter vom systembezogenen Energiemanagement aus durch das Aussenden eines entsprechenden 868/915 MHz Funkdatagramm oder ein entsprechendes Fernsteuerungskommando über die WLAN/PLC Kommunikations-Verbindung oder automatisch durch das Hausgerät mittels einer zeitgesteuerten oder einer Aktivitäts- gesteuerten Selbstausschalt-Funktion beendet werden.

Anhand der Fig. 4 wird nun eine Variante zu Fig. 3 beschrieben, bei der ein gegenüber dem Hausgerät externer Funkschalter eingesetzt wird.

Es wird zunächst davon ausgegangen, dass über ein intelligentes Energieversorgungsnetz (Smart Grid) und/oder dem Internet 41 über das Hausenergiemanagement HEMS, wobei eine Einheit 42 des systembezogenen Energiemanagements auch die Zusammenfassung der extern oder über das Internet und/oder über das Smart Grid eintreffenden Informationen aufnimmt, eine Kommunikation zu einem Großdistanz-Hausgerät 43 aufgebaut werden soll. Die Einwirkung des Internet bzw. des Smart Grid auf die Einheit 42 wird durch die Wirkungslinie 50 veranschaulicht.

Eine der Einheit 42 zugeordnete Prozess-Steuerung 42.1 versucht zuerst über einen eigenen Access-Point 42.2 eine WLAN-Verbindung, vgl. die Wirkungslinie 51.1, mit dem Hausgerät 43 aufzunehmen. Bei fehlgeschlagenem Verbindungsaufbau infolge zu geringer Funkreichweite wird der Steuerungsprozess durch ein eigenes PLC-Interface 42.4 aktivert, was mit der Wirklinie 51.2 hervorgehoben ist. Zugleich erhält eine interne ISM-868/915 MHz Funksendeeinheit 42.3 einen Aktivierungsbefehl 51.3. Es wird bereits hier darauf hingewiesen, dass ein durch den Aktivierungsbefehl 51.3 ausgelöstes Funkdatagramm des Senders 42.3 in einem, nahe des Hausgerätes 43 befindlichen Steckdosen-Funkschalter 46 über eine Einschaltwirkung 53 wichtige Folgefunktionen auszulösen vermag.

Über eine Kurzzeit-Funkverbindung- vgl. 15 in Fig. 2 - in dem 868/915 MHz Funkkanal wird das Aufwach (Wake Up) - Funkdatagramm mit eindeutiger Ziel-Identifikation und Kommando zum Aktivieren einer Stromversorgung für den entfernten Gebäudebereich mehrfach - in der Regel dreimal - ausgesendet, vgl. die Wirklinie 52.

Der Steckdosen-Funkschalter 46, der insbesondere eine Empfängereinheit beinhaltet, um auf der benutzten ISM 868/915 MHz Funkfrequenz ein ausgesendetes Funkdatagramm zu erhalten, aktiviert - vgl. die Wirkungslinien 53 und 54.2 - die Stromzufuhr für einen PLC-WLAN-Extension-Adapter über eine Zwischenstecker/Buchsen-Einheit 47 mit durchgeführtem Stromanschluss. Die Einheit 47 kann auch in dem Steckdosen-Funkschalter 46 aufgenommen werden.

Über die Stromanschluss-Kontakte der Zwischenstecker/Buchsen-Einheit 47 ist das Hausgerät 43 angeschlossen, wozu eine zugehörige Stromversorgungs-Einheit 43.4 dient. Eine Wirkungslinie 54.1 zeigt die positive Einwirkung auf die Einheit 43.4. Von der Stromversorgungs-Einheit 43.4 ausgehend wird die Stromversorgung einer zentralen Bedien- und Kontrolleinheit 43.1 des Hausgerätes aktiviert, was auch mit der Wirklinie 54.1 a gezeigt wird. Nach einem automatischen Start und einer Initialisierung von Hardware /Software der Kontrolleinheit 43.1 wird ein darin befindliches WLAN-Interface 43.3 gestartet und konfiguriert, vgl. die Wirkungslinie 54.1 b.

Über das WLAN-Interface 43.3 meldet sich das Hausgerät anhand der gespeicherten Anmeldedaten als Client an einem PLC-WLAN-Extension-Adapter 44 - der auch einen WLAN- Access-Point aufweist - an und es wird eine WLAN-Funkverbindung zwischen den WLAN- Endgeräten 44 und 43.3 aufgebaut, was mit einer Wirklinie 55.1 in Fig. 4 kenntlich gemacht ist. Über das PLC Interface des PLC-WLAN-Extension-Adapters 44 wird über ein Hausstromnetz 45 eine PLC-Bridge-Verbindung zum PLC-Interface 42.4 der Einheit 42 des systembezogenen Energiemanagements aufgebaut. Dazu wird auch auf eine in Fig. 4 eingezeichnete Wirklinie 55.2 verwiesen.

In weiterer Folge wird der Aufbau der bidirektionalen Kommunikations-Verbindung zwischen der Prozess-Steuerung 42.1 des systembezogenen Energiemanagements eingeschlossen der Beeinflussung durch das Internet bzw. des Smart-Grid und einer zentralen Steuerungs-Prozesseinheit 43.2 auf der Seite des Hausgerätes 23 abgeschlossen, vgl. die Wirkungslinie 56. Danach erfolgt die Übertragung von Steuerungs- und/oder Strommanagement Informationen des systembezogenen Energiemanagements (HEMS) zum Hausgerät 43 bzw. die Übermittlung von Status- oder Monitoring-Informationen vom Hausgerät 43 zu dem systembezogenen Energiemanagement, verkörpert durch die Einheit 42.

Nach Beendigung bzw. Aufhebung der Bedingung, die den Aufbau der WLAN/ PLC Kommunikations-Verbindung zwischen dem systembezogenen Energiemanagement bzw. HEMS, verkörpert durch die Einheit 42, und dem Hausgerät ausgelöst hatte bzw. nach Ablauf der durch das systembezogene Energiemanagement über diese Kommunikations-Verbindung aktivierten Prozessabläufe im Hausgerät 43 kann die Stromversorgung für das Hausgerät 43 und den PLC-WLAN-Extension-Adapter vom systembezogenen Energiemanagement aus explizit durch das Aussenden eines entsprechenden 868/915 MHz Funkdatagramm an den Steckdosen-Funkschalter 46 beendet.

### Bezugszeichenliste

- 1: PLC-WLAN-Adapter
- 2: PLC-WLAN-Extension-Adapter
- 3: Energieversorgungsnetz
- 4: erstes drahtloses Netzwerk (WiFi)
- 5: Internet WLAN-Router
- 6: Ethernet
- 7: WLAN-Access-Point
- 8: zweites drahtloses Netzwerk (WiFi)
- 9: WLAN-fähiges Gerät
- 11: Energiemanagement-Einheit
- 12: WLAN-Funkmodul
- 13: ISM (868/915) Funk-Sendeeinheit
- 14: ISM Funk-Empfangseinheit
- 15: Kurzzeit-Funkverbindung
- 21: Internet; Smart Grid
- 22: systembezogenes Energiemanagement, zugehörige Einheit; HEMS
- 22.1: Prozess-Steuerung
- 22.2: WLAN-Access-Point
- 22.3: ISM (868/915) Funk-Sendeeinheit
- 22.4: PLC-Interface
- 23: Großdistanz-Hausgerät
- 23.1: Kontrolleinheit
- 23.2: zentrale Steuerungs-/Prozesseinheit
- 23.3: WLAN-Interface
- 23.4: zentrale Stromversorgungseinheit
- 23.5: Stromversorgungs-Aufteiler (Splitting-Box)
- 23.6: ISM Funk-Empfangseinheit (Wake-Up)
- 24: PLC-WLAN (Extension)-Adapter
- 25: Energie/ Hausstromnetz
- 30: Internet/Smart-Grid Einwirkung
- 31.1: Wirklinie zu 22.2, Aufbau WLAN
- 31.2: Wirklinie zu 22.4, Aufbau PLC Kommunikation
- 31.3: Wirklinie zu 22.3, Aktivierungsbefehl ISM Sender
- 32: Wirkung Funkdatagrammm
- 33: Wirklinie Aktivierung Stromzufuhr Hausgerät
- 34.1: Wirklinie Stromversorgung Hausgerät 23
- 34.1a: Wirklinie Stromversorgung Kontrolleinheit 23.1
- 34.1b: Wirklinie Konfiguration/Start 23.3
- 34.2: Wirklinie Stromversorgung PLC-WLAN-Adapter
- 35.1: Wirklinie aufgebaute WLAN Funkverbindung
- 35.2: Wirklinie Aktivierung Kommunikation über PLC
- 36: Wirklinie Kommunikation Aufbau (22.1 -23.2) abgeschlossen
- 41: Internet, Smart Grid
- 42: systembezogenes Energiemanagement, zugehörige Einheit; HEMS
- 42.1: Prozess-Steuerung
- 42.2: WLAN-Access-Point
- 42.3: ISM (868/915) Funksendeeinheit
- 42.4: PLC-Interface
- 43: Großdistanz-Hausgerät
- 43.1: Bedien-und Kontrolleinheit
- 43.2: WLAN-Interface
- 43.4: Stromversorgungseinheit
- 44: PLC-WLAN-Extension-Adapter
- 45: Hausstromnetz
- 45: Wirklinie PLC-Kommunikation über 45
- 46: Steckdosen-Funkschalter
- 47: Zwischenstecker/Buchsen-Einheit
- 50: Internet/ Smart-Grid Einwirkung
- 51.1: Wirkungslinie zu 43.3, Aufbau WLAN
- 51.2: Wirkungslinie zu 42.4, Aufbau PLC Kommunikation
- 52: Wirkung Funkdatagrammm
- 54.1: Wirkung Stromversorgungseinheit 43.4
- 53: Einschaltwirkung
- 54.1 a: Wirkung Aktivierung Kontrolleinheit 43.1
- 54.1 b: Wirkung Aktivierung WLAN-Interface 43.2
- 54.2: Wirkung Aktivierung PLC-WLAN-Extension-Adapter
- 55.1: Wirklinie WLAN Funkverbindung
- 55.2: Wirklinie Hausstromnetz
- 56: Wirklinie Kommunikationsaufbau (42.1 - 43.2) abgeschlossen

## Patentansprüche

1. System für ein Energiemanagement für Hausgeräte, wobei für mindestens eine Einheit des Energiemanagements (11; 22; 42) eine Datenkommunikation für mindestens ein eindeutig bestimmbares Hausgerät (9; 23; 43) ausführbar ist, wobei die Datenkommunikation mit dem mindestens einen Hausgerät (23; 43) durch eine direkte WLAN Funk-Verbindung (22.2, 42.2; 23.3; 43.3) bei genügender Funkreichweite durchführbar ist und bei ungenügender Funkreichweite eine Powerline-Überbrückung (22.4, 42.4; 24, 44) für das bestimmbare Hausgerätes (23; 43) mit einer Stromversorgung (23.3; 46) einsetzbar ist, **dadurch gekennzeichnet, dass** die Aktivierung der Stromversorgung (23.3; 46) von Komponenten der Powerline-Überbrückung über eine Kurzzeit-Funkverbindung (15; 32; 52) auslösbar ist, wobei ausgehend von der Einheit (11; 22; 42) eine ISM-Funkeinheit (13; 22.3; 42.3) für die Kurzzeit-Funkverbindung (15; 32; 52) ansteuerbar ist, die für die Aussendung eines Funkdatagramms unter Berücksichtigung eines 868/915-MHz Funkkanals ausgebildet ist.

2. System nach Anspruch 1, **dadurch gekennzeichnet, dass** das mindestens eine, eindeutig bestimmbare Hausgerät ein Großdistanz-Hausgerät (9; 23; 43) ist.

3. System nach Anspruch 1, **dadurch gekennzeichnet, dass** die Einheit (11; 22; 42) des Energiemanagements durch Informationen aus dem Internet bzw. einem intelligenten Energieversorgungsnetz (21; 41) beeinflussbar ist.

4. System nach einem der vorhergehenden Ansprüche, **dadurch gekennzeichnet, dass** ausgehend von der Einheit (11; 22; 42) des Energiemanagements ein erstes WLAN-Funknetz (4; 22,2; 42.2) im Frequenzbereich über 1 GHz aufbaubar ist.

5. System nach einem der vorhergehenden Ansprüche, **dadurch gekennzeichnet, dass** ausgehend von der Einheit (11; 22; 42) ein PLC-Interface (22.4; 42.4) ansteuerbar ist.

6. System nach einem der vorhergehenden Ansprüche, **dadurch gekennzeichnet, dass** das eindeutig bestimmbare Hausgerät (9; 23; 43) eine zugeordnete Einheit (14, 23.6; 46) zum Empfang des Funkdatagramms der Kurzzeit-Funkverbindung (15, 32, 52) aufweist, wobei eine ständige Empfangsbereitschaft der Einheit (14, 23.6; 46) durch eine Batteriespeisung vorliegt.

7. System nach Anspruch 6, **dadurch gekennzeichnet, dass** durch die Einheit (14, 23.6; 46) zum Empfang des Funkdatagramms ein PLC-WLAN-Extension-Adapter (2; 24; 44) aktivierbar ist.

8. System nach Anspruch 6 oder 7, **dadurch gekennzeichnet, dass** durch die Einheit (14, 23.6; 46) zum Empfang des Funkdatagramms ein dem Hausgerät (9; 23; 43) zugeordnetes WLAN-Interface (23.3; 43.3) aktivierbar ist.

9. System nach einem der Ansprüche 6 bis 8, **dadurch gekennzeichnet, dass** die Einheit (23.6) zum Empfang des Funkdatagramms im Hausgerät (23) aufgenommen ist.

10. System nach einem der Ansprüche 6 bis 9, **dadurch gekennzeichnet, dass** die Einheit (46) zum Empfang des Funkdatagramms nahe dem Hausgerät (43) befindlich ist und mit einer Zwischenstecker/Buchsen-Einheit (47) versehen ist.

11. Verfahren zum Betreiben eines Systems nach einem der Ansprüche 1 bis 10, wobei ein Energiemanagement mit einer Einheit (11; 22; 42) für mindestens ein eindeutig bestimmbares Hausgerät (9; 23; 43) durchgeführt wird, indem eine Datenkommunikation von dem Energiemanagement von und zu dem Hausgerät erfolgt und wobei insbesondere das Energiemanagement aus dem Internet oder einem intelligenten Energieversorgungsnetz Daten erhält, wobei zunächst versucht wird, über eine erste drahtlose Datenkommunikation als WLAN-Funk-Verbindung zwischen der Einheit des Energiemanagements und dem bestimmten Hausgerät herzustellen, und falls dies fehlschlägt,
• eine Powerline-Überbrückung zwischen der Einheit des Energiemanagements und dem bestimmten Hausgerät herzustellen,
**dadurch gekennzeichnet, dass**
• eine Kurzzeit-Funkverbindung dazu dient, die Aktivierung einer Stromversorgung von Komponenten der Powerline-Überbrückung, die zu dem bestimmbaren Hausgerät gehören, auszulösen, wobei die Kurzzeit-Funkverbindung ein Funkdatagramm in einem 868/915 MHz-Funkkanal aussendet,
• so dass über die Powerline-Überbrückung eine zweite drahtlose Datenkommunikation als WLAN Verbindung im Bereich des bestimmbaren Hausgerätes gebildet wird, die die erste, fehlgeschlagene drahtlose Datenkommunikation substituiert.

12. Verfahren nach Anspruch 11, **dadurch gekennzeichnet, dass** die erste und die zweite drahtlose Datenkommunikation durch ein lokales Funknetz mit einem Frequenzbereich über 1 GHz, bevorzugt ein WiFi- oder ein Zigbee-Funknetz mit 2,4 GHz, erfolgt.

## Claims

1. System for energy management for domestic appliances, wherein for at least one energy management unit (11; 22; 42) data communication is executable for at least one clearly identifiable domestic appliance (9; 23; 43), wherein the data communication with the at least one domestic appliance (23; 43) can be performed by a direct WLAN wireless connection (22.2, 42.2; 23.3; 43.3) where there is a sufficient radio range, and where there is an insufficient radio range a powerline bridge (22.4,42.4; 24, 44) can be used for the identifiable domestic appliance (23; 43) with a power supply (23.3; 46), **characterised in that** the activation of the power supply (23.3; 46) of components of the powerline bridge can be triggered via a short-time radio link (15; 32; 52), wherein based on the unit (11; 22; 42) an ISM radio unit (13; 22.3; 42.3) is controllable for the short-time radio link (15; 32; 52), which is designed for the transmission of a radio datagram having regard to an 868/915-MHz radio channel.

2. System according to claim 1, **characterised in that** at least one clearly identifiable domestic appliance is a long-distance domestic appliance (9; 23; 43).

3. System according to claim 1, **characterised in that** the energy management unit (11; 22; 42) can be influenced by information from the internet or an intelligent energy supply network (21; 41).

4. System according to one of the preceding claims, **characterised in that**, based on the energy management unit (11; 22; 42), a first WLAN radio network (4; 22,2; 42.2) can be established in the frequency range above 1 GHz.

5. System according to one of the preceding claims, **characterised in that** based on the unit (11; 22; 42) a PLC interface (22.4; 42.4) is controllable.

6. System according to one of the preceding claims, **characterised in that** the clearly identifiable domestic appliance (9; 23; 43) has an assigned unit (14, 23.6; 46) for receiving the radio datagram of the short-time radio link (15, 32, 52), wherein the unit (14, 23.6; 46) is in permanent ready to receive mode as a result of a battery supply.

7. System according to claim 6, **characterised in that** a PLC-WLAN extension adapter (2; 24; 44) can be activated by the unit (14, 23.6; 46) for receiving the radio datagram.

8. System according to claim 6 or 7, **characterised in that** a WLAN interface (23.3; 43.3) assigned to the domestic appliance (9; 23; 43) can be activated by the unit (14, 23.6; 46) for receiving the radio datagram.

9. System according to one of the claims 6 to 8, **characterised in that** the unit (23.6) for receiving the radio datagram is incorporated into the domestic appliance (23).

10. System according to one of the claims 6 to 9, **characterised in that** the unit (46) for receiving the radio datagram is located close to the domestic appliance (43) and has an adapter/socket unit (47).

11. Method for operating a system according to one of the claims 1 to 10, wherein energy management is performed with a unit (11; 22; 42) for at least one clearly identifiable domestic appliance (9; 23; 43) with data communication from energy management taking place from and to the domestic appliance and wherein, in particular, energy management receives data from the internet or an intelligent energy supply network, wherein efforts are first made to establish first wireless data communication as a WLAN wireless connection between the energy management unit and the particular domestic appliance, and if this fails,
• to establish a powerline bridge between the energy management unit and the particular domestic appliance,
**characterised in that**
• a short-time radio link serves to trigger the activation of a power supply of components of the powerline bridge pertaining to the identifiable domestic appliance, wherein the short-time radio link transmits a radio datagram in an 868/915 MHz radio channel,
• in this way forming a second wireless data communication, by way of the powerline bridge, as a WLAN connection in the region of the identifiable domestic appliance which replaces the first failed wireless data communication.

12. Method according to claim 11, **characterised in that** the first and the second wireless data communication is by means of a local radio network with a frequency range of more than 1 GHz, preferably a WiFi or a ZigBee wireless network with 2.4 GHz.

## Revendications

1. Système de gestion de l'énergie pour appareils ménagers, dans lequel, pour au moins une unité de la gestion de l'énergie (11 ; 22 ; 42), une communication de données peut être mise en oeuvre pour au moins un appareil ménager (9 ; 23 ; 43) clairement identifiable, dans lequel la communication de données avec le au moins un appareil ménager (23 ; 43) peut s'effectuer par une liaison radio WLAN directe (22.2, 42.2 ; 23.3 ; 43.3) si la couverture radio est suffisante et, si la couverture radio n'est pas suffisante, un pontage Powerline (22.4, 42.4 ; 24, 44) peut être utilisé pour l'appareil ménager (23 ; 43) identifiable, avec une alimentation électrique (23.3 ; 46), **caractérisé en ce que** l'activation de l'alimentation électrique (23.3 ; 46) de composants du pontage Powerline peut être déclenchée par l'intermédiaire d'une liaison radio de courte durée (15 ; 32 ; 52), sachant qu'à partir de l'unité (11 ; 22 ; 42), une unité radio ISM (13 ; 22.3 ; 42.3) pour la liaison radio de courte durée (15 ; 32 ; 52) peut être commandée, laquelle unité radio ISM est conçue pour émettre un datagramme radio en tenant compte d'un canal radio de 868/915 MHz.

2. Système selon la revendication 1, **caractérisé en ce que** le au moins un appareil ménager clairement identifiable est un appareil ménager grande distance (9 ; 23 ; 43).

3. Système selon la revendication 1, **caractérisé en ce que** l'unité (11 ; 22 ; 42) de la gestion de l'énergie est influençable par des informations provenant de l'internet ou d'un réseau de distribution d'énergie intelligent (21 ; 41).

4. Système selon l'une des revendications précédentes, **caractérisé en ce qu'**à partir de l'unité (11 ; 22 ; 42) de la gestion d'énergie, un premier réseau radio WLAN (4 ; 22.2 42.2) peut être établi dans la gamme de fréquence supérieure à 1 GHz.

5. Système selon l'une des revendications précédentes, **caractérisé en ce qu'**à partir de l'unité (11 ; 22 ; 42), une interface PLC (22.4 ; 42.4) peut être commandée.

6. Système selon l'une des revendications précédentes, **caractérisé en ce que** l'appareil ménager (9 ; 23 ; 43) clairement définissable présente une unité (14 ; 23.6 ; 46) associée servant à la réception du datagramme radio de la liaison radio de courte durée (15, 32, 52), un mode veille de réception permanente de l'unité (14, 23.6, 46) étant assuré par une alimentation par batterie.

7. Système selon la revendication 6, **caractérisé en ce que** l'unité (14, 23.6 ; 46) servant à la réception du datagramme radio permet d'activer un adaptateur d'extension PLC-WLAN (2 ; 24 ; 44).

8. Système selon la revendication 6 ou 7, **caractérisé en ce que** l'unité (14, 23.6 ; 46) servant à la réception du datagramme radio permet d'activer une interface WLAN (23.3 ; 43.3) associée à l'appareil ménager (9 ; 23 ; 43).

9. Système selon l'une des revendications 6 à 8, **caractérisé en ce que** l'unité (23.6) servant à la réception du datagramme radio est logée dans l'appareil ménager (23).

10. Système selon l'une des revendications 6 à 9, **caractérisé en ce que** l'unité (46) servant à la réception du datagramme radio se trouve à proximité de l'appareil ménager (43) et est munie d'un ensemble de fiche intermédiaire mâle/femelle (47).

11. Procédé pour faire fonctionner un système selon l'une des revendications 1 à 10, dans lequel une gestion de l'énergie est mise en oeuvre au moyen d'une unité (11 ; 22 ; 42) pour au moins un appareil ménager (9 ; 23 ; 43) clairement identifiable, en réalisant une communication de données de la gestion de l'énergie vers l'appareil ménager et où notamment la gestion de l'énergie reçoit des données provenant de l'internet ou d'un réseau de distribution d'énergie intelligent, dans lequel on essaie tout d'abord d'établir une première communication de données sans fil sous forme de liaison radio WLAN entre l'unité de la gestion de l'énergie et l'appareil ménager identifié et, si cela échoue,
• d'établir un pontage Powerline entre l'unité de la gestion de l'énergie et l'appareil ménager identifié,
**caractérisé en ce que**
• une liaison radio de courte durée sert à déclencher l'activation d'une alimentation électrique de composants du pontage Powerline qui appartiennent à l'appareil ménager identifié, la liaison radio de courte durée émettant alors un datagramme radio sur un canal radio de 868/915 MHz,
• de sorte à établir par l'intermédiaire du pontage Powerline une seconde communication de données sans fil sous forme de liaison WLAN dans la région de l'appareil ménager, laquelle se substitue à la première communication de données sans fil ayant échouée.

12. Procédé selon la revendication 11, **caractérisé en ce que** la première et la seconde communication de données sans fil se fait par un réseau radio local avec une gamme de fréquence supérieure à 1 GHz, de préférence un réseau radio wifi ou zigbee de 2,4 GHz.
